# FASCICULE DE BREVET EUROPEEN

(11) **EP 4 146 867 B1**
(45) Date de publication et mention de la délivrance du brevet: **26.06.2024**
(21) Numéro de dépôt: 21722903.8
(22) Date de dépôt: 04.05.2021
(51) Int. Cl.: E01C 19/21

(54) **PROCÉDÉ DE RÉNOVATION D'UNE CHAUSSÉE DE CIRCULATION DE VÉHICULES**
VERFAHREN ZUR SANIERUNG EINER FAHRBAHN
METHOD FOR RENOVATING A ROADWAY

(30) Priorité: 05.05.2020 FR 2004460
(43) Date de publication de la demande: 15.03.2023
(73) Titulaire: COLAS, 75015 Paris (FR)
(72) Inventeur: WESENBERG, Nelson K., Ann Arbor, Michigan 48103 (US); FORT, Jean-Paul, Cincinnati, Ohio 45242 (US)
(74) Mandataire: Jacobacci Coralis Harle
(86) Numéro de dépôt international: PCT/EP2021/061759
(87) Numéro de publication internationale: WO 2021/224282

(56) Documents cités:
- EP-A2- 0 456 502
- EP-A2- 1 624 110
- FR-A1- 2 661 929

## Description

### Domaine technique

La présente invention concerne de manière générale le domaine de la construction et de l'entretien des chaussées de circulation et se rapporte plus particulièrement à un procédé de rénovation d'une chaussée de circulation ainsi qu'à une machine de répandage configurée pour mettre en oeuvre le procédé. Les chaussées de circulation concernées sont essentiellement des chaussées de circulation routière mais l'invention peut trouver des applications pour tout type de revêtement de sol comme par exemple les pistes d'aviation, les quais de ports, les surfaces de sport, les parkings, les pistes cyclables.

### Arrière-plan technologique

Certaines chaussées de circulation peuvent se dégrader en générant des fissures plus ou moins étendues à leur surface. Les causes de ces fissures peuvent être multiples, notamment dues à l'importance du trafic routier et/ou à la structure dont l'assise de la chaussée. Ces fissures peuvent être orientées perpendiculairement à la longueur de la chaussée, ce peut par exemple être dû au fait que la chaussée comporte une couche de d'enrobés bitumineux qui a été répandue sur une structure constituée de dalles de béton séparées par des joints, les fissures se produisant au droit des joints. Les fissures peuvent être orientées dans le sens de la longueur de la chaussée, ce peut par exemple être dû au fait que les accotements de la chaussée ne sont pas stabilisés. Les fissures peuvent provenir également d'une mauvaise adhérence entre les couches constituant la chaussée. Enfin les fissures peuvent être générées par le retrait thermique des matériaux constituant la chaussée.

Quoi qu'il en soit, ces fissures sont une cause d'augmentation de la rapidité de dégradation de la chaussée et il est donc important de les sceller et, surtout, d'éviter qu'elles ne réapparaissent en surface.

Il est aussi souhaitable que les procédés mis en oeuvre à cette fin, soient simples, rapides et peu coûteux.

Classiquement, pour réparer les chaussées dégradées, on fraise en surface la chaussée pour éliminer une épaisseur déterminée de la surface de la chaussée dégradée, on élimine les matériaux provenant de ce fraisage puis on applique une ou plusieurs nouvelles couches de matériaux. Cette méthode de réhabilitation étant onéreuse, il peut être choisi d'appliquer directement la(es) nouvelle(s) couches de chaussée sur une membrane géotextile placée sur la chaussée existante et prévenant / ralentissant la remontée des fissures.

On connait, dans le domaine de l'invention, les documents EP 0 456 502 A2, FR 2 661 929 A1 et EP 1 624 110 A2.

Dans ce dernier document EP 1 624 110, il a été proposé d'appliquer sur la chaussée fissurée existante une membrane fabriquée in-situ et constituée d'une couche d'un liant bitumineux, puis une couche de fibres de verre coupées et projetées in-situ, puis une couche d'un liant bitumineux, puis d'un épandage de gravillons, destinés à protéger la membrane du trafic des engins de chantier appliquant la couche d'enrobés de surface qui est ensuite mise en oeuvre sur cette membrane. Cet épandage de gravillons peut toutefois affecter la qualité du collage de la couche d'enrobés sur la membrane.

Par ailleurs, on utilise des couches d'accrochage constituées d'émulsions de bitume pour assurer le collage entre les couches d'une structure de chaussée afin d'en assurer l'intégrité structurale et donc la pérennité. En effet, la qualité de ce collage est essentielle à la survie de la chaussée car celle-ci a été dimensionnée pour le trafic quelle doit recevoir, comme une structure de couches solidaires entre elles. Si ces couches glissent les unes par rapport aux autres, chacune d'elle sera soumise individuellement à des déformations et contraintes plus importantes qu'anticipé et se dégradera par fatigue rapidement, affectant la durée de vie de l'ensemble de la chaussée. Ainsi, la durée de vie d'une chaussée dimensionnée pour 20 ans peut être réduite à 7 ou 8 ans si ses couches sont décollées.

Les émulsions pour couches d'accrochage sont traditionnellement basées sur des émulsions de bitumes « semi-durs » à « mous » ; mais celles-ci présentent l'inconvénient, une fois rompues, de voir leur liant résiduel adhérer aux pneus des engins de construction, affectant l'intégralité du film de liant et donc la qualité du collage, mais aussi entrainant des salissures aux alentours du chantier.

En effet une fois l'émulsion rompue, les 0,3 à 0,6 kg/m2 (0.07 Gal. /SY à 0.14Gal. /SY) de bitume résiduel adhère aux pneus des véhicules de construction avec deux conséquences négatives : premièrement, la détérioration du film de bitume appliqué sur la surface de la chaussée, réduisant ainsi l'efficacité du collage et, deuxièmement, le salissement des voies adjacentes empruntées par la circulation sur le chantier.

Par « bitumes semi-durs à mous », on entend ici un bitume ayant un grade de pénétrabilité à 25°C selon la norme Européenne EN-1426 ou la norme américaine ASTM D5 « Pénétration of Bituminous Materials », supérieure ou égale à 50 dixième de mm (dmm), et peut correspondre par exemples à un ou plusieurs bitumes présentant les classes suivantes : 50/70, 70/100, 100/150, 160/200, etc. Par ailleurs, des émulsions de bitume d'accrochage dites « propres »/« sans traces » (« trackless ») qui une fois répandues peuvent être rapidement « circulées » par des véhicules sans que les roues des véhicules laissent des traces ou emportent le liant résiduel, ont été développées. Ce type d'émulsion « propre » se distingue nettement du point de vue de ses propriétés des émulsions d'accrochage traditionnelles basées sur des bitumes « semi-durs à mous », car ces émulsions « propres » sont basées sur des bitumes dits « durs », caractérisés par une basse pénétrabilité , par exemple ayant un grade de pénétrabilité à 25°C inférieure ou égale à 50 dixième de mm (dmm), et peut correspondre par exemples à un ou plusieurs bitumes présentant les classes suivantes : 35/50, 20/30,10/20, 5/15, etc., et une température « bille-anneau » élevée selon la norme Européenne EN-1427 ou la norme américaine ASTM D36 « Softening Point of Bitumen (Ring-and-Ball Apparatus »). Cette « dureté » peut toutefois affecter la qualité du collage du film de liant résiduel, spécialement par temps froid.

Le demandeur propose, avec la présente invention, de supprimer la couche de gravillons protectrice utilisée classiquement dans la réalisation de la membrane in-situ, grâce à l'emploi d'une couche d'accrochage « propre », le bitume résiduel après rupture de l'émulsion et qui constitue la couche d'accrochage, étant « trackless » ou « propre ».

Solution permettant d'améliorer :
- 1. Le collage obtenu par la réalisation de la membrane in-situ, tout en conservant sa capacité à diminuer et même à stopper la réapparition ou l'apparition de fissures en surface,
   2. Le collage par rapport à celui obtenu par l'utilisation des couches d'accrochage dites « propres ».
   3. L'efficacité du procédé en réduisant les matériaux à utiliser et en simplifiant sa mise en oeuvre.

### Exposé de l'invention

On propose tout d'abord selon l'invention, un procédé de rénovation d'une chaussée de circulation de véhicules dans lequel, dans une première étape, on répand lors d'un seul passage d'une machine de répandage, de bas en haut et superposées sur la chaussée, une première couche bitumineuse dite couche d'accrochage, puis une deuxième couche de fibres, puis une troisième couche bitumineuse dite couche de surface, des fibres étant projetées sur la couche d'accrochage et les fibres projetées ayant une longueur maximale de 12 cm. Selon l'invention, la couche de surface est une couche d'émulsion de bitume « propre » (« trackless ») ou comportant un liant bitumineux anhydre, l'émulsion de bitume « propre » (« trackless ») comportant du bitume dit « dur », l'émulsion de bitume « propre » (« trackless ») donnant un liant résiduel une fois la rupture de l'émulsion obtenue, le liant résiduel de l'émulsion de bitume « propre » (« trackless ») présentant les propriétés suivantes : une pénétrabilité inférieure à 40 dmm et une température Bille-Anneau supérieure à 50°C, et dans une étape ultérieure, on recouvre la couche de surface (30) d'un enrobé bitumineux, et l'émulsion de bitume « propre » (« trackless ») comporte de 30 % à 70 % de bitume, de 30 % à 70 % d'eau, de 0,1 % à 10 % d'agent(s) surfactant(s), de stabilisateur(s) et/ou d'additif(s), les pourcentages étant en poids, le liant anhydre présentant les propriétés suivantes après évaporation des huiles légères : une pénétrabilité inférieure à 40 dmm et une température Bille-Anneau supérieure à 50°C.

D'autres caractéristiques non limitatives et avantageuses du procédé conformes à l'invention, prises individuellement ou selon toutes les combinaisons techniquement possibles, sont les suivantes :
- le liant résiduel de l'émulsion de bitume « propre » (« trackless ») présente de préférence les propriétés suivantes : une pénétrabilité inférieure à 20 dmm et une température Bille-Anneau supérieure à 60°C,
- avantageusement, le liant résiduel de l'émulsion de bitume « propre » (« trackless ») présente les propriétés suivantes : une pénétrabilité d'environ 20 dmm et une température Bille-Anneau d'environ 60°C,
- le liant anhydre présente de préférence les propriétés suivantes après évaporation des huiles légères : une pénétrabilité inférieure à 20 dmm et une température Bille-Anneau supérieure à 60°C,
- avantageusement, le liant anhydre présente les propriétés suivantes après évaporation des huiles légères : une pénétrabilité d'environ 20 dmm et une température Bille-Anneau d'environ 60°C,
- la pénétrabilité ou pénétrabilité est évaluée selon la norme NF EN 1426 - ASTM D5,
- la température Bille-Anneau ou point de ramollissement est évaluée selon la norme NF EN 1427 - ASTM D36,
- l'étape ultérieure est effectuée avec du matériel distinct de la machine de répandage,
- avant la première étape, on fraise ou on rabote la surface de la chaussée afin de détacher des matériaux de surface de la chaussée et on élimine de la chaussée les matériaux détachés,
- les véhicules sont notamment des automobiles, des poids lourds, des engins de chantier tels que des finisseurs,
- les fibres ont une longueur minimale comprise entre 0,5 cm et 2 cm,
- les fibres ont une longueur de 3 cm,
- de préférence, les fibres ont une longueur de 6 cm,
- les fibres ont une longueur de 12 cm,
- les fibres ont une longueur maximale comprise entre 3 cm et 12 cm,
- les fibres sont projetées sur la couche d'accrochage par un flux d'air,
- la chaussée de circulation à rénover comporte des fissures,
- la chaussée de circulation comporte dans sa structure des dalles en béton,
- la couche d'accrochage comporte : soit une émulsion de bitume « propre » (« trackless ») ou un liant bitumineux anhydre, soit une émulsion de bitume autre qu'une émulsion de bitume « propre » (« trackless ») ou un liant bitumineux autre qu'un liant bitumineux anhydre,
- la couche d'accrochage comprend ou est constituée d'une émulsion de bitume « propre » (« trackless »), la couche d'accrochage et la couche de surface comprenant ou étant constituées toutes deux d'une émulsion de bitume « propre » (« trackless »),
- les fibres avant leur utilisation sont stockées sous forme de bobines, les fibres étant continues et enroulées sur les bobines,
- les fibres sont choisies parmi les fibres de verre et les fibres synthétiques et les fibres organiques,
- les fibres synthétiques sont des fibres de polyéthylène, polypropylène, polyester ou une de leurs combinaisons,
- les fibres organiques sont des fibres de cellulose,
- les fibres de verre ou synthétiques sont obtenues par découpage de fibres continues lors du passage de la machine de répandage,
- le découpage des fibres continues a lieu dans un dispositif de projection de fibres d'un système de répandage d'émulsion de bitume et de fibres, le dispositif étant installé dans la machine de répandage,
- d'une manière équivalente, l'émulsion de bitume « propre » de la première couche dite couche d'accrochage et/ou de la troisième couche dite couche de surface est (sont) remplacée(s) par un liant bitumineux anhydre répandu à chaud, typiquement entre 150 et 160°C, les liants bitumineux anhydres étant intrinsèquement « trackless »,
- le liant bitumineux anhydre répandu à chaud est notamment un bitume présentant les classes de performance « PG H-L » (« *Performance Grade »)* suivantes : PG 58-22 ; PG 64-22 ou PG 67-22 (mesurées selon la norme AASHTO M320), ou ces liants anhydres sont des bitumes fluidifiés, c'est-à-dire des bitumes coupes d'huiles pétrolière ou d'origine végétale, pour en abaisser la viscosité et en faciliter le répandage. Ils sont généralement appliqués à des températures variant de 110 à 160°C. Leur viscosité mesurée par l'essai STV 40°C NF T 65-002 est généralement comprise entre 80 et 300 s.
- le liant bitumineux anhydre répandu à chaud respecte les critères climatiques régionaux du système « SuperPave » (PG),
- l'émulsion de bitume « propre » de l'une au moins de la couche d'accrochage et de la couche de surface est/sont remplacée/s par un liant bitumineux anhydre,
- l'émulsion de bitume « propre » (« trackless ») comporte du bitume « dur » ;
- selon l'invention par « bitume dur », on entend un bitume ayant un grade de pénétrabilité à 25°C selon la norme Européenne EN-1426 (2018) allant de 5 à 40 dixièmes de mm (dmm),
- le bitume dur peut correspondre par exemple à un ou plusieurs bitumes présentant les classes suivantes : 35/50, 20/30, 15/25, 10/20, 5/15 selon les normes Européennes EN-13924-1/2
- le ou les additifs sont un ou des polymères,
- l'émulsion de bitume « propre » (« trackless ») comporte de 30 % à 70 % de bitume, de 30 % à 70 % d'eau, et de 0,1 % à 10% d'agent(s) surfactant(s), de stabilisateur(s) et/ou d'additif(s) polymère(s) ou autres, les pourcentages étant en poids,
- l'émulsion de bitume « propre » (« trackless ») comporte de 30 % à 70 % de bitume, de 30 % à 70 % d'eau, et de 0,1 % à 10% d'agent(s) surfactant(s), de stabilisateur(s) et/ou d'additif(s) polymère(s), les pourcentages étant en poids,
- l'émulsion de bitume « propre » (« trackless ») comporte de 30 % à 70 % de bitume, de 30 % à 70 % d'eau, de 0,1 % à 3 % d'agent(s) surfactant(s), de stabilisateur(s) et/ou d'additif(s), les pourcentages étant en poids,
- l'émulsion de bitume « propre » (« trackless ») comporte de 30 % à 70 % de bitume, de 30 % à 70 % d'eau, et de 0,1 % à 3,0 % d'agent(s) surfactant(s), de stabilisateur(s) et/ou d'additif(s) polymère(s), les pourcentages étant en poids,
- l'émulsion de bitume, qu'elle soit « propre » ou non, présente les propriétés suivantes :

| | |
|---|---|
| Viscosité Saybolt-Furol @ 25C, secs | 20-150 |
| Refus au Tamis % Max. | 0.3 |
| Démulsibilité % Min. | 40 |
| Stabilité au Stockage % Max, | 1 |

- selon l'invention, « par émulsion », on entend un « système hétérogène à deux ou plusieurs phases liquides, constitué par une phase liquide continue et au moins une deuxième phase liquide, dispersée dans la première sous forme de fines gouttelettes » (norme NF EN ISO 862 (NF T73-000) d'octobre 1995) ;
- dans le cas des émulsions de bitume la phase liquide dispersée est du bitume pur ou modifié, éventuellement fluidifié ou fluxé ; la phase liquide continue est une phase aqueuse généralement à base d'agents de surfaces, tels qu'au moins un tensioactif anionique, un tensioactif cationique et/ou un tensioactif non-ionique ;
- par « tensioactif », on entend « un composé chimique présentant une activité de surface qui, dissous dans un liquide, en particulier l'eau, abaisse sa tension superficielle ou interfaciale par adsorption préférentielle à la surface liquide/ vapeur ou d'autres interfaces » (norme NF EN ISO 862) ;
- ces tensioactifs sont des agents de surface amphiphiles avec des chaînes hydrocarbonées lipophiles et des têtes polaires hydrophiles ; ainsi ils emprisonnent les billes de bitume afin que les deux phases restent miscibles ;
- à titre d'exemple, les tensioactifs cationiques sont obtenus, par exemple, à partir de la réaction d'une polyamine avec des acides gras d'origine animale ou végétale, ces tensioactifs ainsi obtenus sont de type amidoamine, imidazoline ou polyamine ; en général, les polyamines telles que le diéthylène triamine et le triéthylène tétramine, sont issues de l'industrie pétrolière ;
- à titre d'exemple, les tensioactifs non ioniques peuvent être de nature saccharidique appelés glycoside d'alkyle tels que les APG (Alkylpolyglucosides) ou APP (Alkylpolypentosides) issus respectivement de la réaction glucose/alcool gras et pentose/alcool gras ; le brevet FR 2 731 709 décrit par exemple l'utilisation de ces APG comme co-tensioactifs pour des formulations anioniques de bitume ;
- on trouve généralement, dans la phase aqueuse des acides qui aident à solubiliser lesdits tensioactifs et d'éventuels additifs ;
- les additifs sont de préférence choisis parmi les agents de modification tels que les polymères, les agents modificateurs de pH, les dopes d'adhésivité ;
- les polymères peuvent être choisis parmi le styrène-butadiène-styrène SBS, caoutchouc-butadiène-styrène SBR, latex naturel, éthylène acétate de vinyle EVA, etc.
- les dopes d'adhésivité peuvent être choisie parmi les alkyl-polyamines tels que les alkyl amido-polyamines ou les alkyl imidazo-polyamines ;
- comme agent modificateur de pH, il est possible d'utiliser de l'acide chlorhydrique ;
- le liant résiduel de l'émulsion de bitume « propre » (« trackless ») présente les propriétés suivantes :

| | |
|---|---|
| Résidu par distillation a 177C [distillat huileux, % max] | 3 |
| Pénétrabilité dmm, inférieure à | 40 |
| Température Bille-Anneau, °C, supérieure à | 50 |
| Solubilité %, Min. | 97 |

- dans le cas où la première couche formant la couche d'accrochage est constituée d'une émulsion de bitume qui n'est pas du type « propre » (i.e. elle n'est pas « trackless ») alors le liant résiduel de ladite émulsion de bitume présente les propriétés suivantes :

| | |
|---|---|
| Recouvrement élastique, % 10C , 210 cm élongation: | 55 - 75 |
| Ductilité, cm, Min. | 40 |

- on applique la couche d'accrochage à un dosage compris entre 0,45 kg/m² (0.1 Gal./SY) et 1,8 kg/m² (0.4 Gal./SY),
- les fibres sont des fibres de verre et on applique la couche de fibres de verre à un dosage compris entre 30 gr/m² (0.9 oz./SY) et 120 gr/m² (3.5 oz./SY), typiquement 60 gr/m2 (1.8 oz./SY),
- on applique la couche de surface à un dosage compris entre 0,45 kg/m² (0.1 Gal./SY) et 1,8 kg/m² (0.4 Gal./SY),
- on applique la couche d'accrochage à un dosage de 1,125 kg/m2 +/- 0,675 kg/m² (0.25 Gal./SY +/- 0.15 Gal./SY) et la couche de surface à un dosage de 1,125 kg/m² +/- 0,675 kg/m2 (0.25 Gal./SY +/- 0.15 Gal./SY) et dans lequel les fibres sont des fibres de verre et on applique la couche de fibre de verre à un dosage de 75 gr/m² +/- 45 gr/m² (2.2 oz./SY +/- 1.3 oz./SY),
- dans le cas d'une chaussée fraisée ou rabotée et comportant des sillons parallèles et allongés dans le sens de la longueur de la chaussée, on répand suffisamment d'émulsion de bitume et de fibres pour obtenir une surface sensiblement uniforme,
- après le passage de la machine de répandage et avant l'étape ultérieure dans laquelle on recouvre la couche de surface d'un enrobé bitumineux, il n'est pas répandu de couche de gravillons protectrice sur la couche de surface,
- après le recouvrement de la couche de surface par un enrobé bitumineux, on fait passer une machine de compactage sur l'enrobé bitumineux.

Dans une variante du procédé de l'invention, on omet l'étape de fraisage ou de rabotage de la surface de la chaussée, soit qu'on répande directement sur la surface de la chaussée les trois couches lors d'une rénovation, soit qu'on effectue une construction ou reconstruction de chaussée et qu'on répande les trois couches sur un sous étage de la chaussée en cours de construction ou reconstruction.

Les trois couches peuvent donc être répandues sur une chaussée existante dans la cas d'une rénovation ou sur un sous étage d'une chaussée en cours de construction et, dans tous les cas, la couche de surface sera la couche supérieure des trois couches répandues, c'est-à-dire de bas en haut et superposées, une première couche dite couche d'accrochage constituée d'une émulsion de bitume de préférence « propre », puis une deuxième couche de fibres, puis une troisième couche dite couche de surface constituée d'une émulsion de bitume « propre » (« trackless »).

Une fois les trois couches répandues, on répand dans une étape ultérieure un enrobé bitumineux sur la couche de surface.

Ne faisant pas partie de l'invention revendiquée, il est décrit une machine de répandage simultané de fibres et d'émulsion de bitume pour un procédé de rénovation d'une chaussée de circulation de véhicules, la machine comportant une réserve de fibres, un réservoir d'émulsion de bitume et un système de répandage d'émulsion de bitume et de fibres, le système de répandage d'émulsion de bitume et de fibres comportant une première rampe de répandage d'émulsion de bitume, un dispositif de projection de fibres et une seconde rampe de répandage d'émulsion de bitume, les rampes comportant des buses, la première rampe, le dispositif de projection de fibres et la seconde rampe étant agencés afin de répandre successivement et superposées lors de l'avancement de la machine et d'un passage, une première couche dite couche d'accrochage constituée de l'émulsion de bitume projetée par la première rampe, puis une deuxième couche de fibres projetées par le dispositif de projection de fibres, lesdites fibres projetées ayant une longueur maximale de 12 cm, puis une troisième couche dite couche de surface constituée de l'émulsion de bitume projetée par la seconde rampe, le réservoir d'émulsion de bitume comportant une émulsion de bitume« propre » (« trackless ») afin que les fibres puissent être prises entre deux couches d'émulsion de bitume « propre » (« trackless »), l'émulsion de bitume « propre » (« trackless ») comportant du bitume dit « dur », l'émulsion de bitume « propre » (« trackless ») donnant un liant résiduel une fois la rupture de l'émulsion obtenue, le liant résiduel de l'émulsion de bitume « propre » (« trackless ») présentant les propriétés suivantes : une pénétrabilité inférieure à 40 dmm et une température Bille-Anneau supérieure à 50°C, et l'émulsion de bitume « propre » (« trackless ») comporte de 30 % à 70 % de bitume, de 30 % à 70 % d'eau, de 0,1 % à 10 % d'agent(s) surfactant(s), de stabilisateur(s) et/ou d'additif(s), les pourcentages étant en poids.

Des variantes avantageuses de la machine, prises individuellement ou selon toutes les combinaisons techniquement possibles, sont les suivantes :
- la machine est automotrice,
- la machine est remorquée,
- le système de répandage d'émulsion de bitume et de fibres est sur une remorque tractée,
- la première rampe de répandage d'émulsion de bitume pour la couche d'accrochage est une rampe amont ou avant par rapport au dispositif de projection et en considération du sens d'avancement de la machine,
- la seconde rampe de répandage d'émulsion de bitume pour la couche de surface est une rampe aval ou arrière par rapport au dispositif de projection et en considération du sens d'avancement de la machine,
- les fibres sont des fibres de verre, les fibres étant sous forme de fibres continues dans la réserve de fibres,
- le dispositif de projection de fibres comporte un ensemble de modules comportant chacun deux buses et un outil permettant la traction des fibres continues, la coupe des fibres continues et la projection des fibres coupées vers la chaussée,
- dans des variantes, la machine est configurée pour permettre que la première couche dite couche d'accrochage et la troisième couche dite couche de surface soient réalisées avec des émulsions de bitume différentes, la troisième couche dite couche de surface étant cependant réalisée avec une émulsion de bitume « propre » (« trackless »), la première couche dite couche d'accrochage pouvant ainsi être réalisée avec une émulsion de bitume qui n'est pas du type « propre » (i.e. elle est non « trackless »).

L'invention concerne enfin la chaussée obtenue par la mise en oeuvre du procédé de l'invention dans lequel la première couche dite couche d'accrochage et la troisième couche dite couche de surface sont toutes deux composées ou constituées d'une émulsion de bitume « propre » (« trackless ») et qui comporte donc un sandwich de fibres entre deux couches d'émulsion de bitume « propre » (« trackless »), la couche de surface étant en outre recouverte d'un enrobé bitumineux.

Dans une variante de réalisation de la chaussée, la première couche formant la couche d'accrochage comprend au moins ou est constituée d'une émulsion de bitume qui n'est pas du type « propre » (i.e. elle n'est pas « trackless »).

Dans une autre variante de réalisation de la chaussée, la première couche formant la couche d'accrochage comprend au moins ou est constituée d'une émulsion résultant du mélange de bitumes « mous » et « durs ».

Dans encore une autre variante de réalisation de la chaussée, la première couche formant la couche d'accrochage est réalisée par répandage d'une couche d'émulsion de bitume « mou » (i.e. non « trackless ») suivie, par-dessus, d'une couche d'émulsion de bitume « dur »/« propre » (i.e. « trackless »).

Grâce à l'invention, il n'est pas nécessaire de répandre en surface, sur l'émulsion de bitume recouvrant les fibres, une couche supplémentaire de graviers avant de répandre un enrobé bitumineux. En outre, après l'application de la couche de surface 30, un enrobé bitumineux est quasi immédiatement et directement appliqué sur la couche de surface, et, ensuite, des compacteurs peuvent intervenir. Les interventions sur la chaussée sont donc réduites et la chaussée peut être rendue encore plus rapidement à la circulation par rapport aux méthodes traditionnelles.

Pour le reste de la description, à moins qu'il n'en soit spécifié autrement, l'indication d'un intervalle de valeurs « de X à Y » ou « entre X et Y », dans la présente invention, s'entend comme incluant les valeurs X et Y.

### Brève description des dessins

**[****Fig. 1****]** représente une vue latérale d'une machine avec un système de répandage d'émulsion de bitume et de fibres relevé pour circulation entre chantiers,
**[****Fig. 2****]** représente une vue latérale sur l'arrière d'une machine avec le système de répandage d'émulsion de bitume et de fibres abaissé en position de répandage,
**[****Fig. 3****]** représente une vue latérale du système de répandage d'émulsion de bitume et de fibres au niveau d'un module avec l'outil dans une position de travail et dans une position de dégagement,
**[****Fig. 4****]** représente une vue en coupe d'une chaussée rénovée selon le procédé de l'invention.

### Description détaillée d'un exemple de réalisation

La description qui va suivre en regard des dessins annexés, donnés à titre d'exemples non limitatifs, fera bien comprendre en quoi consiste l'invention et comment elle peut être réalisée selon plusieurs modalités.

Dans le principe d'un premier mode de réalisation où l'on utilise une émulsion de bitume « propre » (« trackless »), on met en oeuvre un procédé de rénovation d'une chaussée de circulation de véhicules dans lequel, dans une première étape, on répand lors d'un seul passage d'une machine de répandage, de bas en haut et superposées sur la chaussée, une première couche dite couche d'accrochage comprenant au moins ou étant constituée d'une émulsion de bitume, puis une deuxième couche de fibres, puis une troisième couche dite couche de surface comprenant au moins ou étant constituée d'une émulsion de bitume « propre » (« trackless »), des fibres étant projetées sur la couche d'accrochage et les fibres projetées ayant une longueur maximale de 12 cm et dans une étape ultérieure, on recouvre la couche de surface d'un enrobé bitumineux.

Cette émulsion de bitume « propre » (« trackless ») est basée sur des bitumes modifiés ou non, dont la dureté a été ajustée pour qu'ils n'adhèrent pas aux pneus des camions mais puissent être activés par la température des enrobés bitumineux à chaud appliqués et en assurer ainsi le collage. À cet effet thermoadhésif (définition fonctionnelle) s'ajoute une rupture rapide de ces émulsions, généralement en moins de 30 minutes, permettant la mise en oeuvre rapide des enrobés et de meilleurs rendements de chantiers.

Les bitumes résiduels de ces émulsions « propres » (« trackless ») sont caractérisés par deux essais :
- Une pénétrabilité (NF EN 1426 - ASTM D5) inférieure à 40 dmm et de préférence inférieure à 20 dmm, voire de 20 dmm ;
- Un point de ramollissement Bille-Anneau (NF EN 1427 - ASTM D36) supérieur à 50°C et de préférence supérieur à 60°C, voire d'environ 60°C.

Dans le principe d'un second mode de réalisation où l'on utilise un liant bitumineux anhydre, on met en oeuvre un procédé de rénovation d'une chaussée de circulation de véhicules dans lequel, dans une première étape, on répand lors d'un seul passage d'une machine de répandage, de bas en haut et superposées sur la chaussée, une première couche dite couche d'accrochage comprenant au moins ou étant constituée d'une émulsion de bitume, puis une deuxième couche de fibres, puis une troisième couche dite couche de surface comprenant au moins ou étant constituée d'un liant bitumineux anhydre, des fibres étant projetées sur la couche d'accrochage et les fibres projetées ayant une longueur maximale de 12 cm et dans une étape ultérieure, on recouvre la couche de surface d'un enrobé bitumineux.

Les liant bitumineux anhydres répandus à chaud peuvent être :
- Notamment un bitume présentant les classes de performance « PG H-L » (« Performance Grade ») suivantes : PG 58-22 ; PG 64-22 ou PG 67-22 (mesurées selon la norme AASHTO M320). Ils sont généralement appliqués à des températures variant de 150 à 160°C.
- Ou ces liants anhydres sont des bitumes fluidifiés, c'est-à-dire des bitumes coupés d'huiles pétrolière ou d'origine végétale, pour en abaisser la viscosité et en faciliter le répandage. Ils sont généralement appliqués à des températures variant de 110 à 150°C. Leur viscosité mesurée par l'essai STV 40°C NF T 65-002 est généralement comprise entre 80 et 300 s. Après évaporation des huiles légères, le liant répandu présente des caractéristiques similaires à celles du liant résiduel des émulsions « propres », c'est-à-dire :
   - Une pénétrabilité (NF EN 1426 - ASTM D5) inférieure à 40 dmm et de préférence inférieure à 20 dmm, voire d'environ 20 dmm ;
   - Un point de ramollissement Bille-Anneau (NF EN 1427 - ASTM D36) supérieur à 50°C et de préférence supérieur à 60°C, voire d'environ 60°C.

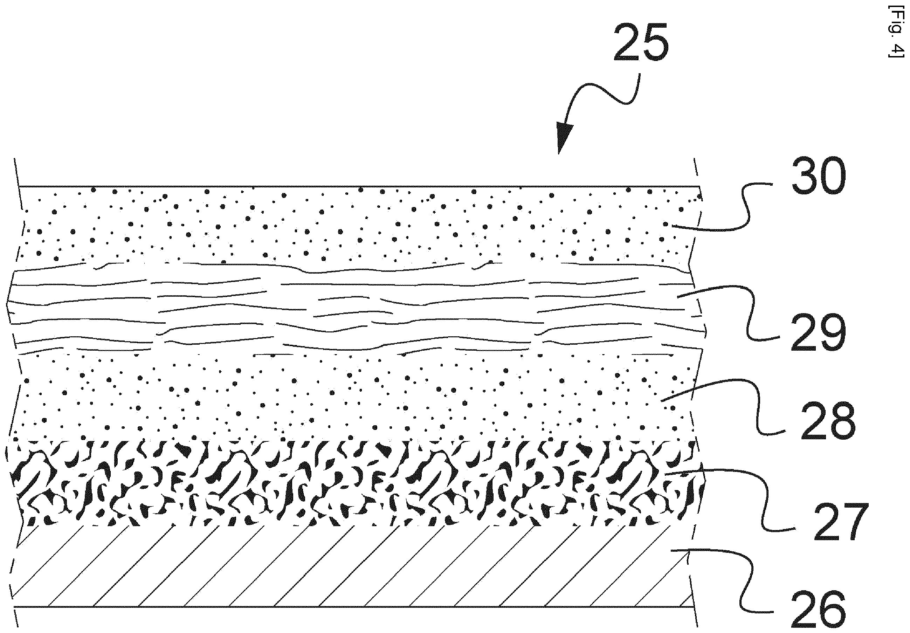

On va tout d'abord présenter en relation avec la figure 4, la chaussée rénovée obtenue avec le procédé de l'invention et que permet la mise en oeuvre de la machine de répandage de l'invention.

Cette chaussée rénovée 25 a été obtenue à partir d'une chaussée initiale dont on a fraisé ou raboté (ces termes étant équivalents dans le contexte de l'invention) la surface supérieure et éliminé les produits du fraisage. Cette chaussée rénovée a été schématisée figure 4 par une couche fraisée 27 de type enrobés sur un sous-bassement 26. On comprend que la couche fraisée 27 peut être de tout type et dépend de la structure de la chaussée initiale. Cette couche fraisée 27 peut par exemple être une route usagée dont la surface a été fraisée. Une première couche dite couche d'accrochage 28 d'émulsion de bitume « propre » (« trackless ») a été répandue sur la couche fraisée 27 puis une seconde couche de fibres 29 et, enfin une troisième couche dite couche de surface 30 d'émulsion de bitume « propre ». Cet ensemble est ensuite recouvert d'un enrobé bitumineux (non représenté sur la figure 4) et le tout est ensuite compacté. À la suite du répandage des trois couches 28, 29, 30 et de l'enrobé bitumineux, un compacteur ou un équivalent est donc passé sur l'ensemble.

On a donc réalisé un sandwich constitué de fibres entre deux couches d'une même émulsion de bitume « propre ».

D'une manière équivalente, la couche d'accrochage 28 et la couche de surface 30 sont « propres » (« trackless ») mais l'une ou les deux ne sont pas une émulsion de bitume mais un liant bitumineux anhydre répandu à chaud, typiquement entre 110 et 160°C, les liants bitumineux anhydre étant intrinsèquement « trackless ».

Dans le cas où deux émulsions différentes sont utilisées, une première pour la couche d'accrochage 28 et une seconde pour la couche de surface 30, la première couche, d'accrochage, peut être basée sur un bitume plus mou afin de favoriser le collage, alors que la couche de surface est de type « propre » / « trackless ».

D'une manière générale une couche d'accrochage « propre »/« trackless » est une couche d'émulsion de bitume qui, une fois que la rupture de l'émulsion a eu lieu, peut être circulée et sur laquelle les pneus ou roues ne laissent pas de traces et le bitume n'accroche pas aux pneus ou roues.

Ce type d'émulsion « trackless », parfois qualifiée de thermoadhésive, est notamment formulée avec des liants bitumineux dur, modifiés ou non. Le liant résiduel de l'émulsion de bitume « propre » (« trackless »), une fois la rupture de l'émulsion obtenue, présente généralement les caractéristiques suivantes : une pénétrabilité inférieure à 40 dmm et de préférence inférieure à 20 dmm, voire d'environ 20 dmm, et un point de ramollissement supérieur à 50°C, de préférence supérieur à 60°C, voire d'environ 60 °C, selon les normes EN-1426 ou ASTM D5 « Pénétration of Bituminous Materials » et EN-1427 ou ASTM D36 « Softening Point of Bitumen (Ring-and-Ball Apparatus) ».

Selon l'invention, « par liant résiduel », on entend le bitume résiduel obtenu une fois l'émulsion de bitume « propre » (« trackless ») rompue.

Le processus de rupture d'une émulsion se déroule en plusieurs étapes : (1) Floculation : les globules de la phase bitume dispersés dans la phase aqueuse se rapprochent en formant un réseau lâche ; (2) Coagulation : la phase bitume et la phase aqueuse se séparent avec l'agglomération des globules en un film continu ; (3) Prise : le film de bitume adhère à son support, le reste d'eau est expulsée ; (4) Murissement : lorsque le liant résiduel de l'émulsion contient des huiles légères qui s'évaporent.

L'émulsion bitumineuse selon l'invention peut contenir les additifs usuels utilisés dans la technique et notamment des stabilisants, agents anti-gel, agents épaississants, latex naturels ou synthétiques (par exemple un latex de styrène-butadiène-styrène SBS, polychloroprène ou caoutchouc-butadiène-styrène SBR), lesquels sont préférablement ajoutés à la phase aqueuse dispersante.

À noter que l'ouverture au trafic de la zone de rénovation dépend de la vitesse de rupture de l'émulsion. On a donc intérêt à réaliser des émulsions à rupture rapide pour les couches d'accrochage « Trackless » afin d'optimiser les travaux de rénovation.

Le liant bitumineux anhydre présente des propriétés similaires et une fois répandu sur une chaussée, cette dernière peut être circulée et les pneus ou roues ne laissent pas de traces et le liant n'accroche pas aux pneus ou roues.

Les fibres sont typiquement des fibres de verre résultant d'un découpage de fibres de verre continues. En pratique, étant donné les quantités de matières (fibres et émulsion de bitume) mises en oeuvre, les fibres se retrouvent noyées dans l'émulsion de bitume et les émulsions de bitume des deux couches 28, 30 se retrouvent en continuité à travers la couche de fibres.

Dans une variante, la couche d'accrochage 28 est une émulsion de bitume mais qui n'est pas du type « propre » (elle n'est pas « trackless »).

La machine de répandage exemplifiée qui est automotrice, ne peut stocker qu'un seul type d'émulsion de bitume et c'est une émulsion de bitume « propre » (« trackless »). La machine comporte en pratique un seul réservoir d'émulsion de bitume et du type « propre ». Dans des variantes on peut prévoir de répartir l'émulsion de bitume « propre » entre plusieurs moyens de stockage au sein de la machine, notamment pour répartir les masses utilement.

En outre, cette machine utilise des fibres qui sont des fibres de verre et ces fibres sont stockées dans la machine sous forme de fibre de verre continues.

Le système de répandage d'émulsion de bitume et de fibres de la machine est modulaire. Les modules sont disposés transversalement, côte à côte, et permettent chacun de répandre sur une bande de longueur de la chaussée, de l'émulsion de bitume « propre » pour la couche d'accrochage, des fibres pour la couche de fibre, et l'émulsion de bitume « propre » pour la couche de surface, les couches se superposant. Chaque module comporte d'avant en arrière selon le sens d'avancement de la machine : une première buse de répandage de l'émulsion de bitume « propre » pour la couche d'accrochage, un outil permettant la traction de fibres continues, la coupe des fibres continues et la projection des fibres coupées vers la chaussée sur la couche d'accrochage, et une seconde buse de répandage de l'émulsion de bitume « propre » pour la couche de surface. Les premières et secondes buses sont reliées à un organe de distribution commun de l'émulsion de bitume « propre ».

Le système de répandage d'émulsion de bitume et de fibres comporte donc deux fois plus de buses que d'outils de coupe des fibres continues du fait que chaque module comporte deux buses et un outil. Ce système permet une distribution transversale de fibres homogène dont la précision se situe en tout point dans un écart de moins de 10%, sur la largeur de chaussée traitée.

Les outils sont disposés dans un dispositif de projection de fibres qui comporte un carter évitant la dispersion inappropriée des fibres coupées. Le carter qui est normalement fermé sur ses faces supérieure et latérales est ouvert vers le bas et la chaussée.

Du fait de la disposition transversale, côte à côte, des buses, on forme pour les premières buses, une première rampe de répandage d'émulsion de bitume « propre » pour la couche d'accrochage, et pour les secondes buses, une seconde rampe de répandage d'émulsion de bitume « propre » pour la couche de surface. On doit noter que l'on utilise le terme « rampe » pour un ensemble de buses mais que ce terme couvre aussi bien le cas où l'ensemble de buses est alimenté par un même collecteur/nourrice et sont alors commandées globalement ensembles en ouverture et fermeture, que le cas où les buses sont commandées individuellement ou par sous-ensembles de sous-collecteur/nourrice commun. Chaque buse réalise un jet d'émulsion de bitume « propre » en éventail sensiblement sur une bande transversale de chaussée correspondant sensiblement à la largeur du module et de manière à former une couche d'émulsion sensiblement homogène sous la rampe correspondante par les jets des, premières ou secondes respectivement, buses des différents modules. Chaque outil du dispositif de projection de fibres est actionné par un organe de transmission de force commun qui est un arbre d'entraînement en rotation disposé transversalement et traversant les dits outils. Chaque outil est monté amovible entre une position de travail où il est entraîné par l'arbre d'entraînement et une position de dégagement où il est accessible à un opérateur et à l'arrêt. Le montage amovible de l'outil est à pivotement, l'outil se dégageant du module vers le haut. Toutefois, de préférence, le montage amovible de l'outil dans son module permet en outre une position de repos dans laquelle l'outil n'est pas entraîné par l'arbre d'entraînement tout en étant dans le module afin que le carter du dispositif de projection de fibres soit fermé sur ses faces supérieure et latérales et permette à la machine de travailler alors que certains outils ont été mis à l'arrêt. On peut prévoir des vannes d'arrêt pour chaque buse ou sous-ensembles de buses. Outre l'accessibilité aisée de l'ensemble des éléments mécaniques du fait de la modularité mise en oeuvre, chaque outil est démontable individuellement et accessible en quelques secondes pour un nettoyage, un ajustement, un remplacement de lames de coupe ou un remplacement par échange standard. De par sa structure, les risques d'accident lors de la maintenance sont réduits puisque les outils ne sont plus fonctionnels lorsqu'ils sont pivotés et accessibles.

L'outil comporte un premier axe pouvant être mis en prise de rotation sur l'arbre d'entraînement et portant un galet coupeur, un second axe portant un galet presseur destiné à maintenir la fibre continue au contact du galet coupeur et un troisième axe portant un galet de maintien permettant le maintien de la fibre continue sur le galet presseur en amont du galet coupeur.

De préférence, la longueur des fibres coupées est réglable. Typiquement, on peut choisir au moins trois tailles de fibres coupées : 3, 6 ou 12 cm. La mise en rotation de l'arbre d'entraînement est assurée par un moteur hydraulique. Le débit de fibres coupées est ajustable par une commande de la vitesse de rotation de l'arbre d'entraînement. La quantité d'émulsion de bitume « propre » répandue sur la chaussée est ajustable grâce à un moyen réglable de mise en pression de l'émulsion de bitume « propre » envoyée vers les buses.

La mise en fonctionnement du moteur hydraulique est commandée à distance et les première et seconde rampes comportent en amont, du côté de l'organe de distribution commun, une vanne commandée à distance permettant de couper ou non le répandage de l'émulsion de bitume « propre » par les rampes, la commande de la mise en fonctionnement du moteur hydraulique et de la vanne étant commune afin de permettre ou non le répandage simultané de fibres coupées et de l'émulsion de bitume « propre » pour tout le système de répandage d'émulsion de bitume et de fibres de la machine. Dans une modalité de réalisation plus évoluée, concernant les rampes, on prévoit plusieurs vannes commandant chacune un sous-ensemble de modules adjacents afin de permettre ou non le répandage pour les deux buses de chaque module commandé par la vanne. Enfin, dans une modalité de réalisation encore plus évoluée, concernant les rampes, on prévoit une vanne commandée par module afin de permettre ou non le répandage pour les deux buses de chaque module individuellement.

Le système de répandage d'émulsion de bitume et de fibres est mobile verticalement à l'arrière de la machine et peut être remonté ou descendu selon les besoins. Lors du répandage, le système est descendu afin d'être proche de la chaussée.

Le système de répandage d'émulsion de bitume et de fibres représenté sur les figures est une unité d'extension transversale (i.e. selon la largeur de la chaussée) fixe et dont la largeur maximale (i.e. tous les modules sont fonctionnels) de chaussée traitée est fixe et déterminée et correspond sensiblement à la largeur de la machine.

On prévoit cependant des moyens permettant une largeur maximale de chaussée traitée variable dépassant la largeur de la machine, par exemple en utilisant plusieurs systèmes de répandage d'émulsion de bitume et de fibres dont certains sont repliables sur l'arrière de la machine à la manière des rampes de pulvérisation agricole repliables qui peuvent être repliées à l'arrière d'un tracteur pour être ramenées dans la largeur du tracteur. En variante, on prévoit au moins deux systèmes de répandage d'émulsion de bitume et de fibres décalés longitudinalement ou en hauteur et pouvant se translater horizontalement entre eux entre une position où les systèmes sont tous à l'arrière de la machine et des positions décalées latéralement entre les systèmes et l'arrière de la machine. En autre variante, on prévoit un système de répandage d'émulsion de bitume et de fibres télescopique, l'arbre d'entraînement étant télescopique et les modules pouvant s'écarter les uns des autres, le carter comportant des parties télescopiques ou des parties souples à type de soufflets et la largeur de répandage de l'émulsion étant réglée par la hauteur du système par rapport à la chaussée du fait que les jets sont en éventails. Des combinaisons de ces différentes solutions sont envisagées pour obtenir une largeur maximale de répandage variable.

Ladite machine représentée est donc un véhicule routier automoteur avec poste de conduite et de contrôle. Le moteur du véhicule actionne une pompe hydraulique servant à actionner le moteur hydraulique de l'arbre d'entraînement. La machine représentée comporte un système de répandage d'émulsion de bitume et de fibres, un réservoir d'émulsion de bitume « propre », un moyen de fluidification de ladite émulsion de bitume « propre », un moyen de mise en pression de ladite émulsion de bitume « propre » pour envoi vers les buses des rampes, une réserve de fibres de verre continues, un compresseur d'air et une réserve d'air comprimé destiné au moins à la mise en surpression du carter et à la projection des fibres coupées sur la chaussée.

L'air comprimé peut en outre servir à la mise en pression de l'émulsion de bitume « propre » et le réglage de la pression d'air permet alors de régler le débit de pulvérisation de l'émulsion. Toutefois dans le cas où le moyen de mise en pression de l'émulsion est une pompe de l'émulsion, on peut prévoir un circuit de recirculation de l'émulsion de bitume « propre », la partie non envoyée vers les buses étant refoulée dans le réservoir de l'émulsion de bitume « propre », le débit de cette partie refoulée et/ou le débit de la pompe de l'émulsion étant réglable(s) afin de régler la quantité d'émulsion répandue sur la chaussée.

Les commandes et réglages du fonctionnement de la machine, notamment du système de répandage d'émulsion de bitume et de fibres et des circuits associés, s'effectuent sous la supervision d'un opérateur installé dans le poste de conduite mais on peut prévoir un pupitre de commande et réglage déporté, en dehors du poste de conduite. Une ou plusieurs caméras dont l'/les écrans de visualisation sont dans le poste de conduite, peuvent filmer le système de répandage d'émulsion de bitume et de fibres et la chaussée à l'arrière dudit système afin que l'opérateur ait une information visuelle sur le système et le résultat du répandage. Le système de répandage d'émulsion de bitume et de fibres et la machine autorisent des réglages de débit sur une large plage aussi bien pour les fibres coupées que pour l'émulsion.

De préférence, un système de régulation à micro-processeur permet d'assurer un répandage sensiblement constant en quantité de l'émulsion de bitume « propre » et fibres coupées malgré les variations de la vitesse de déplacement et du nombre de modules opérationnels et donc de la largeur de répandage. L'opérateur peut ainsi programmer les quantités d'émulsion de bitume « propre » et de fibres ou un rapport fibre/émulsion particulier, et la machine respectera ses préconisations indépendamment de la vitesse et/ou signalera des incompatibilités.

Ainsi, l'invention permet d'atteindre une fiabilité et une répétitivité accrues, une constance en termes de respect des objectifs, des quantités appliquées, tout en offrant des possibilités d'adaptation de variations de volume importantes. De plus, la valeur réduite de pression du liant pour éjection par les buses par rapport aux systèmes connus permet une réduction considérable des émissions parasites et éclaboussures estimée jusqu'à environ 50%.

Le réservoir d'émulsion de bitume « propre » comporte un moyen d'agitation permettant d'homogénéiser ladite émulsion de bitume « propre ».

Le moyen de fluidification de l'émulsion de bitume « propre » est un chauffage avec brûleur d'un combustible qui est choisi parmi le fioul ou le gaz ou autre et, qui est de préférence, un fioul léger. Le brûleur est à allumage automatique et un système de régulation de la température selon une consigne est mis en oeuvre. En variante, on peut utiliser un chauffage électrique.

La pompe hydraulique ou l'air comprimé peuvent en outre servir à actionner des actionneurs et, par exemple, un/des vérins de relevage du système de répandage d'émulsion de bitume et de fibres.

On prévoit l'utilisation manuelle par un opérateur suivant la machine, d'une lance d'application de l'émulsion de bitume « propre » afin de corriger des éventuelles irrégularités de répandage de la couche de surface, la lance étant reliée par un tuyau à la machine.

Pour le stockage des fibres de verre, la machine comporte une réserve de fibres continues sous forme d'un ensemble de bobines de fibres. La réserve de fibres continues est disposée à l'avant de la machine, en un emplacement d'accès facile pour le remplacement/rechargement des bobines de fibre et ce qui favorise en outre une certaine répartition des masses sur la machine. Les fibres de verre continues passent de la réserve au système de répandage d'émulsion de bitume et de fibres par des conduites sur la partie supérieure de la machine.

Le système de répandage d'émulsion de bitume et de fibres peut être fixé d'une manière amovible ou non à l'arrière de la machine. On a vu que le système de répandage d'émulsion de bitume et de fibres pouvait être monté ou descendu et, on prévoit éventuellement, qu'il puisse aussi être décalé latéralement pour déborder latéralement d'un côté ou de l'autre de la machine.

Le véhicule représenté comporte quatre roues motrices et permet une vitesse de répandage comprise entre environ 2 et 5 km/h pour une distribution de fibres coupées entre 0 et environ 200 grammes/m² (0 et 5.9 oz/SY) de chaussée et un débit de l'émulsion de bitume « propre » compris entre environ 0 et 3,5 litres/m². (0 et 0.77 Gal. /SY). Les valeurs de zéro correspondent à un arrêt du répandage, notamment pour des déplacements entre des chantiers.

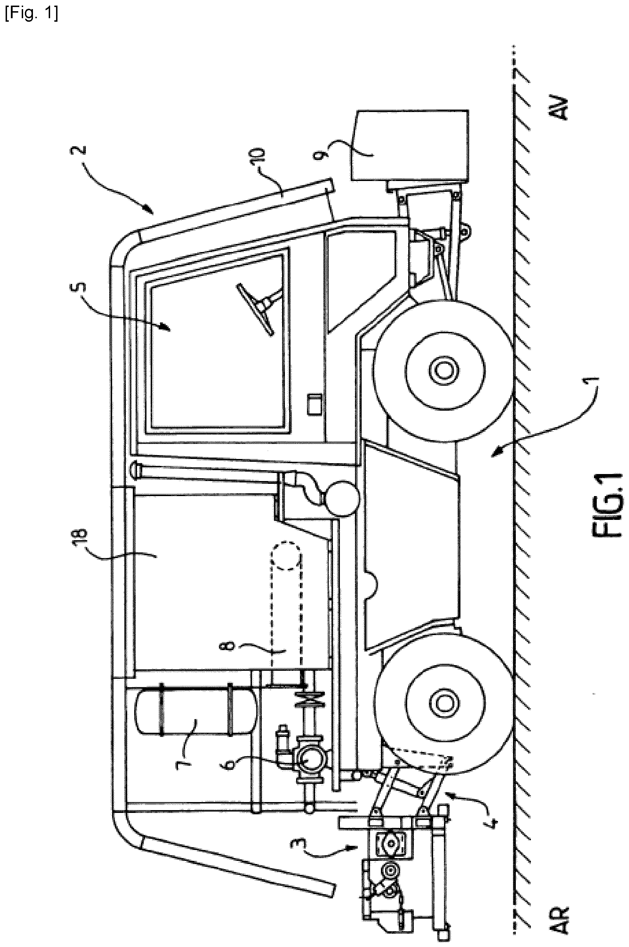

Plus précisément, en relation avec la Figure 1, le véhicule 2 routier automoteur à quatre roues motrices constituant la machine 1, comporte, à l'avant, une cabine de conduite et de contrôle 5 pour un opérateur. Sur l'avant de la cabine 5 est disposée une réserve de fibres comportant des bobines de fibres continues, la réserve de fibres étant sous forme d'un coffre 9 capoté qui est à hauteur d'accès pour qu'un opérateur ayant ouvert le capot, puisse installer et remplacer les bobines une fois celles-ci dévidées. Dans une variante non représentée, le coffre 9 est monté à l'avant avec une suspension destinée à amortir les effets des irrégularités des chaussées au niveau du coffre 9. Un ensemble de conduites 10 permet d'acheminer les fibres continues vers l'arrière du véhicule, dans le système 3 de répandage d'émulsion de bitume et de fibres, en passant sur la partie supérieure dudit véhicule. Dans d'autres modalités de réalisation, les fibres continues peuvent passer vers l'arrière d'une manière différente et, par exemple, par des conduites latérales, voire inférieures.

Lors du remplacement d'une bobine, afin d'envoyer de l'avant et du coffre 9 vers l'arrière et le système 3 de répandage d'émulsion de bitume et de fibres, une nouvelle fibre continue d'une bobine neuve, l'opérateur engage manuellement l'extrémité du fil continu de la nouvelle bobine dans l'orifice avant de la conduite puis avec un pistolet à air comprimé envoi de l'air comprimé par ce même orifice avant, ce qui crée un courant d'air avant-arrière dans la conduite qui entraîne la fibre continue vers les modules. Une fois que la fibre continue ainsi entraînée est sortie par l'orifice arrière de la conduite, cette dernière est happée par l'outil correspondant, ce dernier étant en position de travail, et l'opérateur peut alors arrêter le soufflage d'air comprimé dans la conduite. Un pistolet à air comprimé est donc rendu disponible à l'avant du véhicule 2.

Le véhicule 2 est à moteur à carburant liquide type fioul léger. Une citerne/réservoir 18 d'environ 1000 litres pour l'émulsion de bitume « propre » occupe la partie de châssis à l'arrière de la cabine 5. La citerne comporte une trappe d'accès à sa partie supérieure pour remplissage. Un moyen de chauffage est utilisé pour fluidification de l'émulsion de bitume « propre », sous forme d'un brûleur 8, de préférence automatique, au fioul léger qui est prélevé dans le réservoir de carburant du véhicule. Notons que dans des variantes non représentées, le chauffage peut être au gaz, au fioul lourd ou toute autre substance combustible, voire à l'électricité.

À l'arrière du véhicule 2 et sur son châssis, on trouve une pompe 6 de mise en pression de l'émulsion de bitume « propre » ainsi qu'un réservoir 7 d'air comprimé d'environ 30 litres produit par un compresseur d'air, de préférence le propre compresseur d'air du véhicule et qui sert au freinage. Une partie de l'émulsion de bitume « propre » passant par la pompe 6 peut être renvoyée dans le réservoir 18 d'émulsion de bitume pour recirculation. Dans une alternative ou combinaison non représentée, la mise en pression de l'émulsion de bitume « propre » peut être obtenue avec l'air comprimé.

Avantageusement, de l'air comprimé peut-être envoyé dans une partie du circuit de l'émulsion de bitume « propre » afin de pouvoir le vider et le nettoyer à la fin d'un chantier, notamment pour éviter que les buses ne se bouchent.

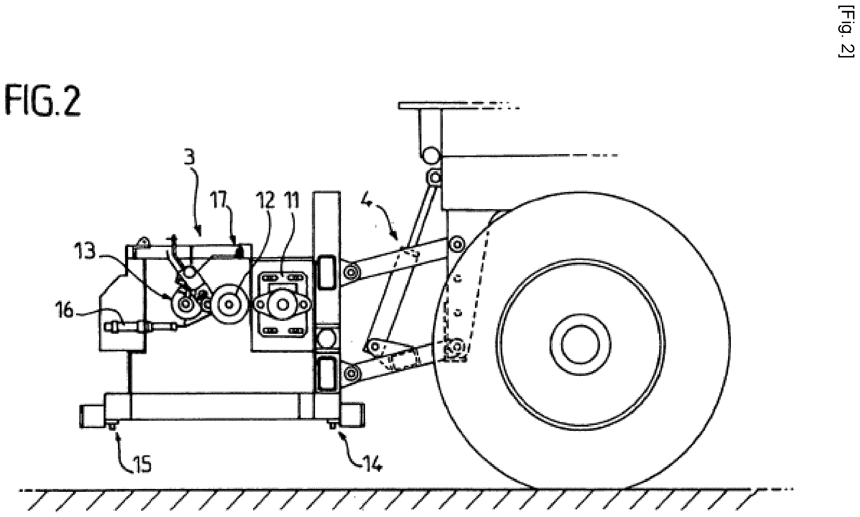

Le système 3 de répandage d'émulsion de bitume et de fibres est monté sur l'arrière du châssis du véhicule 2 par l'intermédiaire d'un attelage 4 mobile commandé. L'attelage mobile 4 commandé est, sur la Figure 1, relevé en position de transport, le système 3 étant alors éloigné de la chaussée. L'attelage mobile 4 peut également être mis dans une position de répandage, le système 3 étant alors descendu et proche de la chaussée, comme cela sera vu ultérieurement en relation avec la Figure 2. On peut prévoir que l'attelage mobile 4 permette en outre un déplacement latéral du système 3 de répandage d'émulsion de bitume et de fibres.

Des moyens de couplage adaptés sont mis en oeuvre entre le système 3 de répandage d'émulsion de bitume et de fibres et le véhicule 2 afin de permettre le passage de l'émulsion de bitume « propre », de l'air comprimé, des fibres continues, de l'énergie/fluide hydraulique et des circuits de contrôle et commande. En particulier, le système 3 de répandage d'émulsion de bitume et de fibres reçoit l'émulsion de bitume « propre » mis sous pression par la pompe 6 par au moins une conduite souple non représentée ici. De même, l'air comprimé du réservoir 7 est envoyé dans le système 3 de répandage d'émulsion de bitume et de fibres par l'intermédiaire de conduites souples. Enfin, les fibres continues qui sortent des conduites 10 pour atteindre le système 3 de répandage d'émulsion de bitume et de fibres sont intrinsèquement souples et peuvent être tirées pour être déroulées des bobines.

Le système 3 de répandage d'émulsion de bitume et de fibres qui est vu latéralement sur la Figure 1, comporte un ensemble de modules. Cet ensemble de modules forme deux rampes à buses 14, 15 de répandage d'émulsion de bitume « propre » et un dispositif de projection de fibres disposé entre les deux rampes. Le dispositif de projection de fibres qui est dans un carter, comporte pour chaque module un outil permettant de tirer les fibres continues, de les découper et de les répandre sur la chaussée.

La machine 1 constituée du véhicule 2 et de son système 3 de répandage d'émulsion de bitume et de fibres à l'arrière ainsi que de sa réserve de fibres continues à l'avant, a les dimensions approximatives suivantes : longueur totale 4750mm, largeur totale 1300mm, hauteur totale 2300mm, largeur d'épandage 1200mm. Le poids opérationnel de la machine est d'environ 4750kg et elle peut se déplacer entre les chantiers à une vitesse maximale d'environ 40km/h. Un système de contrôle automatisé de type micro-ordinateur avec écran d'affichage permet à un opérateur dans la cabine de conduite du véhicule de sélectionner des modes opératoires (arrêt de certains modules, débits respectifs de l'émulsion de bitume « propre » et/ou de fibres coupées, vitesse d'avancement...), de contrôler et réguler le fonctionnement de la machine (les débits notamment en fonction de la vitesse d'avancement, régulation du chauffage de l'émulsion de bitume « propre »...), signaler des anomalies et de fournir des comptes rendus de l'activité opérationnelle de la machine.

Dans l'exemple représenté, le système 3 de répandage d'émulsion de bitume et de fibres comporte douze modules, soit douze outils et vingt-quatre buses 14, 15. Une telle machine permet de travailler sur 1,20 m de largeur maximum, mais elle permet aussi de travailler à des largeurs inférieures par pas de 100 mm (largeur d'un module) en arrêtant certains modules (arrêt de l'outil et des deux jets correspondants). On comprend que le système 3 de répandage d'émulsion de bitume et de fibres, du fait qu'il est modulaire, est facilement adaptable en différentes largeurs tout en conservant architecture semblable.

Des vannes commandées sont mises en oeuvre dans le circuit fluidique d'amenée d'émulsion de bitume « propre » vers les modules afin de pouvoir couper l'alimentation en émulsion de chaque module (deux buses) individuellement, à la demande.

De préférence, on maintien en surpression par de l'air comprimé tous les modules, même ceux qui ne sont pas fonctionnels, afin d'éviter des remontées de vapeur d'émulsion vers les outils. La mise en surpression des modules peut également avoir un effet favorable sur l'éjection vers le bas des fibres coupées, les modules n'étant ouverts que vers le bas en position de travail et, de préférence, également en position de repos grâce à une double articulation des outils, et le flux d'air ne pouvant s'échapper que par le bas. Dans une variante, on peut prévoir des vannes commandées pour l'air comprimé de chaque module.

Des moyens de régulation selon consigne de la pression du circuit fluidique d'émulsion de bitume « propre » agissant sur la pompe 6 et/ou sur l'air comprimé au cas où ce dernier est utilisé pour la mise en pression de l'émulsion, peuvent être mis en oeuvre afin de maintenir sensiblement constante la pression dans les buses 14, 15, la consigne pouvant varier en fonction d'une programmation et des conditions opérationnelles (vitesse de déplacement, quantité à répandre...). Des moyens de régulation selon consigne de la pression de l'air comprimé peuvent aussi être mis en oeuvre. Dans une configuration particulière, l'actionneur de mise en prise de l'outil 13 sur l'arbre d'entraînement 12 et la vanne d'alimentation en l'émulsion de bitume « propre » des deux buses 14, 15 d'un module donné sont commandés en parallèle afin que lorsque l'outil 13 du module est arrêté (ou en position de dégagement), la fourniture de l'émulsion de bitume « propre » aux buses soit aussi arrêtée.

La Figure 2 permet de voir le système 3 de répandage d'émulsion de bitume et de fibres dans sa position de répandage, la commande de l'attelage 4 l'ayant abaissé. Dans chaque module, une première buse 14 vers l'avant et une seconde buse 15 vers l'arrière, pour projection de l'émulsion de bitume « propre » sur la chaussée, encadrent le dispositif de projection de fibres avec ses modules comportant chacun un outil 13 chargé de la distribution de fibres coupées sur la chaussée. Les outils 13 sont actionnés par mise en prise fonctionnelle sur l'arbre d'entraînement 12 commun aux différents modules et lui-même actionné par un moteur 11 disposé dans le système 3 de répandage d'émulsion de bitume et de fibres. Le moteur 11 est hydraulique de préférence mais dans certaines variantes peut être mécanique, pneumatique ou électrique, voire autre. La transmission entre le moteur 11 et l'arbre d'entraînement 12 est effectuée de préférence par courroie bien que d'autres moyens puissent être mis en oeuvre (chaîne ou engrenages) ou que, même, l'entraînement soit direct.

Chacun des outils 13 est monté amovible dans son module entre une position de dégagement où il est accessible à un opérateur en dehors du module et arrêté et deux positions où il se trouve dans le module : une position de travail où il est en prise et entraîné par l'arbre d'entraînement et une position de repos où il est arrêté, l'outil n'étant alors plus en prise.

Le montage amovible de l'outil 13 est à pivotement sur une charnière 17, l'outil se dégageant du module vers le haut en basculant pour laisser libre accès à l'opérateur, vers l'arrière, aux galets, moyens de coupe, d'entraînement et autres, ces derniers étant sur un châssis outil basculant. Lorsque l'outil est dans le module (en position de travail ou de repos), le module est fermé sur toutes ses faces sauf la face inférieure vers le sol. Grâce à une seconde articulation au sein de l'outil, il est possible d'avoir une position de travail (en prise fonctionnelle sur l'arbre d'entraînement) et une position de repos (non-prise) alors que l'outil est dans le module et le module fermé. Le passage de la position de travail à celle de repos, et inversement, est obtenu par mise en oeuvre d'un actionneur pneumatique commandé 16 qui agit sur l'outil pour mettre en prise fonctionnelle ou non l'outil 13 sur l'arbre d'entraînement 12. Notons que dans une variante simplifiée non représentée, une seule articulation, du type de celle référencée 17, peut permettre d'obtenir les trois positions sus indiquées, de dégagement, de travail et de repos.

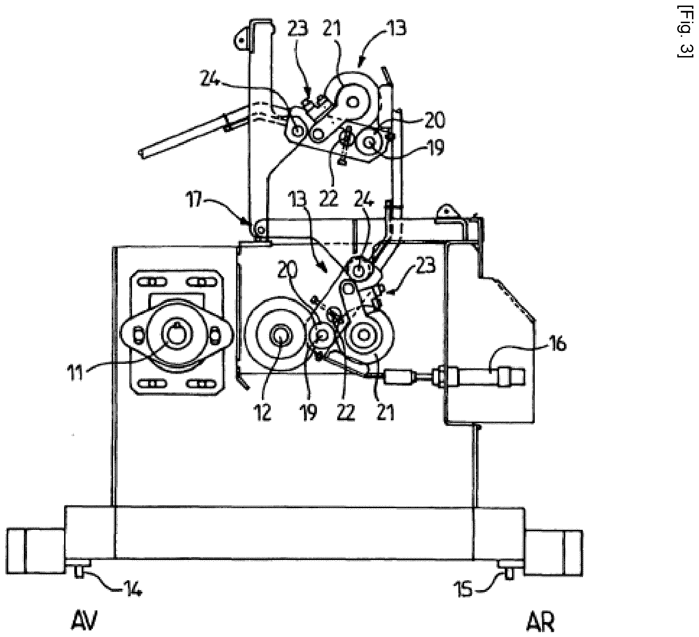

Un élément de type roue caoutchoutée permet la mise en prise fonctionnelle de l'outil sur l'arbre d'entraînement 12 par friction. Plus précisément et comme mieux visible figure 3, chacun des outils des modules comporte un premier axe 19 sur lequel se trouve la partie venant en prise sur l'arbre d'entraînement 12 par friction pour transmettre le couple/mouvement de rotation à un galet coupeur. Sur ce premier axe 19, se trouve monté un galet coupeur 20 avec des lames interchangeables. Une roue caoutchoutée (ou autre matière) est montée solidaire de l'arbre d'entraînement 12 et c'est par l'intermédiaire de cette roue que peut être mis en prise le galet coupeur. L'outil comporte en outre sur un deuxième axe, un galet presseur 21 monté libre en rotation qui permet de maintenir la fibre continue au contact du galet coupeur afin de permettre sa coupe. La pression du galet presseur est assurée par un système réglable à ressort 23 permettant la compensation de l'usure et le réglage de la pression. Un galet de maintien 22 également monté libre en rotation sur un troisième axe, permet le maintien de la fibre continue sur le galet presseur 21 en amont du galet coupeur 20 tout en évitant le dégagement vers l'arrière de la fibre continue lorsque l'outil est au repos. La position du galet de maintien 22 est ajustable et il est monté sur ressort pour compensation de l'usure. Ces éléments, axes et galets, sont montés sur un support articulé en 24 qui permet, en fonction de sa position, la mise en position de travail ou en position de repos de l'outil. Ce support est lui-même monté articulé en 17 par rapport au châssis du module afin de permettre le basculement complet de l'outil hors du module dans une position de dégagement de l'outil pour des opérations de nettoyage, maintenance ou de remplacement des éléments. Des paliers, typiquement des roulements à bille ou à rouleaux, sont mis en oeuvre au niveau de certaines des séparations entre modules et aux deux extrémités du système 3 de répandage d'émulsion de bitume et de fibres pour maintenir l'arbre d'entraînement au sein du système 3. L'arbre d'entraînement 12 peut être continu ou non (par exemple segmenté, notamment en deux parties s'engrainant/venant en prise) en travers du système 3 de répandage d'émulsion de bitume et de fibres. On comprend que la machine peut être modifiée selon les besoins sans pour autant sortir du cadre défini par les revendications. On peut aussi installer le système de répandage d'émulsion de bitume et de fibres sur une remorque attelée à un véhicule, le tout formant la machine de répandage pour la rénovation de chaussée de circulation permettant la mise en oeuvre du procédé de l'invention. Dans le cas où la machine serait prévue pour répandre deux types d'émulsion de bitume dont une « propre », la machine peut comporter deux lignes de répandage avec chacune une pompe et des moyens de régulation ainsi que deux réservoirs ou, alors, un réservoir séparé en deux parties indépendantes.

Une des deux cuves ou une partie de l'unique cuve peut comporter une émulsion de bitume mou, c'est-à-dire une émulsion qui n'est pas une émulsion « propre »/« trackless », la deuxième cuve ou l'autre partie de l'unique cuve comportant l'émulsion « propre »/« trackless ». L'utilisation de deux types d'émulsion de bitume permet d'adapter le bitume résiduel à l'usage : collage à la chaussée et non-collage aux pneus, et cela permet également d'en ajuster le dosage.

L'invention permet donc d'améliorer le collage de la couche d'enrobé à la « membrane » formée par le sandwich couche d'accrochage-fibre- couche de surface, en supprimant l'application de gravillons de protection, grâce à l'utilisation d'une émulsion pour couche d'accrochage dite « propre » (« trackless »). Les dosages en bitume résiduel visés sont approximativement compris entre 0,4 kg/m² et 0,6 kg/m² (0.09 Gal. /SY et 0.14 Gal. /SY) avec un dosage en fibres à environ 100 gr/m² (3.0 oz/SY) On peut donc utiliser moins de bitume par rapport aux solutions connues tout en ayant de meilleurs résultats en termes de collage, de résistance à la remontée des fissures, grâce notamment à l'absence de la couche de gravillons des solutions connues. En outre, les performances en collage obtenues par l'invention sont aussi améliorées par rapport à une couche d'accrochage « propre » seule à dosage en liant équivalent à celle de la « membrane » de l'invention, les fibres intervenant donc dans la performance au collage, ce qui n'était pas attendu.

## Revendications

1. Procédé de rénovation d'une chaussée de circulation de véhicules dans lequel, dans une première étape, on répand lors d'un seul passage d'une machine de répandage, de bas en haut et superposées sur la chaussée (26, 27), une première couche bitumineuse dite couche d'accrochage (28), puis une deuxième couche de fibres (29), puis une troisième couche bitumineuse dite couche de surface (30), des fibres étant projetées sur la couche d'accrochage et les fibres projetées ayant une longueur maximale de 12 cm, **caractérisé en ce que** la couche de surface (30) est une couche d'émulsion de bitume « propre » (« trackless ») ou comportant un liant bitumineux anhydre,
l'émulsion de bitume « propre » (« trackless ») comportant du bitume dit « dur », l'émulsion de bitume « propre » (« trackless ») donnant un liant résiduel une fois la rupture de l'émulsion obtenue, le liant résiduel de l'émulsion de bitume « propre » (« trackless ») présentant les propriétés suivantes : une pénétrabilité inférieure à 40 dmm et une température Bille-Anneau supérieure à 50°C,
et **en ce que**, dans une étape ultérieure, on recouvre la couche de surface (30) d'un enrobé bitumineux,
et **en ce que** l'émulsion de bitume « propre » (« trackless ») comporte de 30 % à 70 % de bitume, de 30 % à 70 % d'eau, de 0,1 % à 10 % d'agent(s) surfactant(s), de stabilisateur(s) et/ou d'additif(s), les pourcentages étant en poids,
le liant anhydre présentant les propriétés suivantes après évaporation des huiles légères : une pénétrabilité inférieure à 40 dmm et une température Bille-Anneau supérieure à 50°C.

2. Procédé selon la revendication 1, dans lequel le liant résiduel de l'émulsion de bitume « propre » (« trackless ») présente les propriétés suivantes : pénétrabilité inférieure à 20 dmm et température bille-Anneau supérieure à 60°C.

3. Procédé selon la revendication 1 ou la revendication 2, dans lequel l'émulsion de bitume « propre » (« trackless ») comporte de 30 % à 70 % de bitume, de 30 % à 70 % d'eau, de 0,1 % à 3 % d'agent(s) surfactant(s), de stabilisateur(s) et/ou d'additif(s), les pourcentages étant en poids.

4. Procédé selon l'une quelconque des revendications 1 à 3, dans lesquelles le ou les additifs sont un ou des polymères.

5. Procédé selon l'une quelconque des revendications 1 à 4, dans lequel la couche d'accrochage (28) comporte :
soit une émulsion de bitume « propre » (« trackless ») ou un liant bitumineux anhydre,
soit une émulsion de bitume autre qu'une émulsion de bitume « propre » (« trackless ») ou un liant bitumineux autre qu'un liant bitumineux anhydre.

6. Procédé selon l'une quelconque des revendications 1 à 5, dans lequel les fibres sont choisies parmi les fibres de verre et les fibres synthétiques et les fibres organiques.

7. Procédé selon l'une quelconque des revendication 1 à 6, dans lequel l'émulsion de bitume, qu'elle soit « propre » ou non, présente les propriétés suivantes :
Viscosité Saybolt-Furol @ 25C, secs : 20-150
Refus au Tamis % Max. : 0.3
Démulsibilité % Min. : 40
Stabilité au Stockage % Max : 1.

8. Procédé selon l'une quelconque des revendication 1 à 7, dans lequel l'émulsion de bitume « propre » (« trackless ») comporte un liant résiduel et ledit liant résiduel présente les propriétés suivantes :
Résidu par distillation a 177C [distillat huileux, % max] : 3
Solubilité %, Min. : 97.

9. Procédé selon l'une quelconque des revendication 1 à 8, dans lequel on applique la couche d'accrochage à un dosage de 1,125 kg/m² +/- 0,675 kg/m² (0.25 Gal./SY +/- 0.15 Gal./SY) et la couche de surface à un dosage de 1,125 kg/m² +/- 0,675 kg/m² (0.25 Gal./SY +/- 0.15 Gal./SY) et dans lequel les fibres sont des fibres de verre et on applique la couche de fibre de verre à un dosage de 75 gr/m² +/- 45 gr/m² (2.2 0z./SY +/- 1.3 0z./SY).

10. Procédé selon l'une quelconque des revendication 1 à 9, dans lequel, avant la première étape, on fraise ou on rabote la surface de la chaussée afin de détacher des matériaux de surface de la chaussée et on élimine de la chaussée les matériaux détachés.

11. Procédé selon la revendication 10, dans lequel la chaussée fraisée ou rabotée comporte des sillons parallèles et allongés dans le sens de la longueur de la chaussée et on répand suffisamment d'émulsion de bitume et de fibres pour obtenir une surface sensiblement uniforme.

12. Procédé selon l'une quelconque des revendications 1 à 11, dans lequel le liant bitumineux anhydre est répandu à chaud.

## Patentansprüche

1. Verfahren zur Sanierung einer Fahrbahn, bei dem man in einem ersten Schritt bei einem einzigen Durchlauf einer Streumaschine, von unten nach oben und auf der Fahrbahn (26, 27) übereinander, eine als Haftschicht (28) bezeichnete und bitumenhaltige erste Schicht, dann eine zweite Schicht (29) aus Fasern, dann eine als Oberflächenschicht (30) bezeichnete dritte Schicht aufbringt, wobei Fasern auf die Haftschicht geschleudert werden und die geschleuderten Fasern eine maximale Länge von 12 cm haben, **dadurch gekennzeichnet, daß** die Oberflächenschicht (30) eine "saubere" ("spurenfreie") Bitumenemulsionsschicht ist oder ein wasserfreies bitumenartiges Bindemittel aufweist,
wobei die "saubere" ("spurenfreie") Bitumenemulsion einen sogenannten "harten" Bitumen aufweist, wobei die "saubere" ("spurenfreie") Bitumenemulsion nach dem Brechen der erhaltenen Emulsion ein Restbindemittel ergibt, wobei das Restbindemittel der "sauberen' ("spurenfreien") Bitumenemulsion die folgenden Eigenschaften aufweist: eine Durchdringbarkeit von weniger als 40 dmm und eine Ring-Kugel-Erweichungstemperatur von mehr als 50 °C,
und daß man die Oberflächenschicht (30) bei einem späteren Schritt mit einem bituminösen Mischgut bedeckt,
und daß die "saubere" ("spurenfreie ") Bitumenemulsion 30 % bis 70 % Bitumen, 30 % bis 70 % Wasser, 0,1 % bis 10 % oberflächenaktive(s) Mittel, Stabilisatoren) und/oder Zusatzstoffe) aufweist, wobei die Prozente Gewichtsprozente sind, wobei das wasserfreie Bindemittel nach Verdunsten der leichten Öle die folgenden Eigenschaften aufweist: eine Durchdringbarkeit von weniger als 40 dmm und eine Ring-Kugel-Erweichungstemperatur von mehr als 50 °C.

2. Verfahren gemäß Anspruch 1, wobei das Restbindemittel der "sauberen" ("spurenfreien") Bitumenemulsion die folgenden Eigenschaften aufweist: Durchdringbarkeit weniger als 20 dmm und Ring-Kugel-Erweichungstemperatur von mehr als 60 °C.

3. Verfahren gemäß Anspruch 1 oder Anspruch 2, wobei die "saubere" ("spurenfreie") Bitumenemulsion 30 % bis 70 % Bitumen, 30 % bis 70 % Wasser, 0,1 % bis 3 % oberflächenaktive(s) Mittel, Stabilisator(en) und/oder Zusatzstoffe) aufweist, wobei die Prozente Gewichtsprozente sind.

4. Verfahren gemäß einem der Ansprüche 1 bis 3, wobei der bzw. die Zusatzstoffe ein Polymer ist oder Polymere sind.

5. Verfahren gemäß einem der Ansprüche 1 bis 4, wobei die Haftschicht (28) entweder eine "saubere ("spurenfreie") Bitumenemulsion oder ein wasserfreies bitumenartiges Bindemittel aufweist
oder eine andere Bitumenemulsion als eine "saubere" ("spurenfreie") Bitumenemulsion oder ein anderes Bindemittel als ein wasserfreies bitumenartiges Bindemittel aufweist.

6. Verfahren gemäß einem der Ansprüche 1 bis 5, wobei die Fasern aus Glasfasern und synthetischen Fasern und organischen Fasern ausgewählt sind.

7. Verfahren gemäß einem der Ansprüche 1 bis 6, wobei die Bitumenemulsion, sei sie "sauber" oder nicht, die folgenden Eigenschaften aufweist:
Seybolt-Furol-Viskosität @ 25C, Sek.: 20 - 150
Siebrückhalt % max.: 0,3
Entmischung % min.: 40
Lagerfestigkeit % max. : 1.

8. Verfahren gemäß einem der Ansprüche 1 bis 7, wobei die "saubere" ("spurenfreie") Bitumenemulsion ein Restbindemittel aufweist und das Restbindemittel die folgenden Eigenschaften aufweist:
Destillationsrest bei 177C [öliges Destillat, % max.]: 3
Lösbarkeit %, min.: 97.

9. Verfahren gemäß einem der Ansprüche 1 bis 8, wobei die Haftschicht mit einer Dosierung von 1,125 kg/m² +/- 0,675 kg/m² (0,25 Gal./SY +/- 0,15 Gal./SY) und die Oberflächenschicht mit einer Dosierung von 1,125 kg/m² +/- 0,675 kg/m² (0,25 Gal./SY +/- 0,15 Gal./SY) aufgebracht wird und wobei die Fasern Glasfasern sind und die Glasfaserschicht mit einer Dosierung von 75 gr/m² +/- 45 gr/m² (2,2 Oz./SY +/- 1,3/Oz./SY aufgebracht wird.

10. Verfahren gemäß einem der Ansprüche 1 bis 9, wobei man vor dem ersten Schritt die Oberfläche der Fahrbahn abfräst oder abhobelt, um Oberflächenmaterial der Fahrbahn abzulösen, und das abgelöste Material von der Fahrbahn entfernt.

11. Verfahren gemäß Anspruch 10, wobei die abgefräste oder abgehobelte Fahrbahn parallele und der Länge der Fahrbahn nach ausgerichtete Rillen aufweist und hinreichend viel Bitumenemulsion und Fasern ausgebreitet werden, um eine im Wesentlichen gleichmäßige Oberfläche zu erhalten.

12. Verfahren gemäß einem der Ansprüche 1 bis 11, wobei das wasserfreie bitumenartige Bindemittel heiß aufgetragen wird.

## Claims

1. A method for renovating a vehicle traffic pavement, in which, in a first step, a first bituminous coat, called the tack coat (28), then a second coat of fibres (29), then a third bituminous coat, called the surface coat (30), are spread in a single passage of a spreading machine, from bottom to top and superimposed to each other on the pavement (26, 27), fibres being sprayed on the tack coat and the sprayed fibres having a maximum length of 12 cm, **characterized in that** the surface coat (30) is a coat of "clean" ("trackless") bitumen emulsion or including an anhydrous bituminous binder,
the "clean" ("trackless") bitumen emulsion including so-called "hard" bitumen, the "clean" ("trackless") bitumen emulsion providing a residual binder once the emulsion breaking obtained, the residual binder of the "clean" ("trackless") bitumen emulsion having the following properties: penetrability lower than 40 dmm and Ball-Ring temperature higher than 50°C,
and **in that**, in a subsequent step, the surface coat (30) is covered with a bituminous asphalt,
and **in that** the "clean" ("trackless") bitumen emulsion includes from 30 % to 70 % of bitumen, from 30 % to 70 % of water, from 0.1 % to 10 % of surfactant agent(s), stabilizer(s) and/or additive(s), the percentage being in weight,
the anhydrous binder having the following properties after evaporation of the light oils: penetrability lower than 40 dmm and Ball-Ring temperature higher than 50°C.

2. The method according to claim 1, wherein the residual binder of the "clean" ("trackless") bitumen emulsion has the following properties: penetrability lower than 20 dmm and Ball-Ring temperature higher than 60°C.

3. The method according to claim 1 or claim 2, wherein the "clean" ("trackless") bitumen emulsion includes from 30 % to 70 % of bitumen, from 30 % to 70 % of water, from 0.1 % to 3 % of surfactant agent(s), stabilizer(s) and/or additive(s), the percentage being in weight.

4. The method according to any one of claims 1 to 3, wherein the additive(s) are one or several polymer(s).

5. The method according to any one of claims 1 to 4, wherein the tack coat (28) includes:
either a "clean" ("trackless") bitumen emulsion or an anhydrous bituminous binder,
or a bitumen emulsion other than a "clean" ("trackless") bitumen emulsion or a bituminous binder other than an anhydrous bituminous binder.

6. The method according to any one of claims 1 to 5, wherein the fibres are chosen among glass fibres and synthetic fibres and organic fibres.

7. The method according to any one of claims 1 to 6, wherein the bitumen emulsion, whether it is "clean" or not, has the following properties:
Saybolt-Furol Viscosity @ 25C, secs: 20 - 150
Sieve non-passing fraction, % Max.: 0.3
Demulsibility, % Min.: 40
Storage stability, % Max: 1.

8. The method according to any one of claims 1 to 7, wherein the "clean" ("trackless") bitumen emulsion includes a residual binder and said residual binder has the following properties:
Residue by distillation at 177C [oil distillate, % max]: 3
Solubility %, Min. : 97.

9. The method according to any one of claims 1 to 8, wherein the tack coat is applied at a dosage of 1.125 kg/m² +/- 0.675 kg/m² (0.25 Gal./SY +/- 0.15 Gal./SY) and the surface coat at a dosage of 1.125 kg/m² +/- 0.675 kg/m² (0.25 Gal./SY +/- 0.15 Gal./SY) and wherein the fibres are glass fibres and the glass fibre coat is applied at a dosage of 75 gr/m² +/- 45 gr/m² (2.2 oz./SY +/- 1.3 oz./SY).

10. The method according to any one of claims 1 to 9, wherein, before the first step, the pavement surface is milled or planed in order to detach surface materials from the pavement and the detached materials are eliminated from the pavement.

11. The method according to claim 10, wherein the milled or planed pavement includes parallel grooves, elongated in the pavement length direction, and the bitumen emulsion and the fibres are spread in a sufficient quantity to obtain a substantially uniform surface.

12. The method according to any one of claims 1 to 11, wherein the anhydrous bituminous binder is hot spread.
